(19) Europäisches Patentamt
European Patent Office
Office européen des brevets

(11) **EP 2 753 477 B1**

(12) **EUROPÄISCHE PATENTSCHRIFT**

(45) Veröffentlichungstag und Bekanntmachung des Hinweises auf die Patenterteilung:
**09.12.2015 Patentblatt 2015/50**

(21) Anmeldenummer: **12743117.9**

(22) Anmeldetag: **24.07.2012**

(51) Int Cl.:
***B60G 7/00*** *(2006.01)*

(86) Internationale Anmeldenummer:
**PCT/EP2012/064446**

(87) Internationale Veröffentlichungsnummer:
**WO 2013/034355 (14.03.2013 Gazette 2013/11)**

(54) **LAGERUNGS- UND KRAFTÜBERTRAGUNGSBAUTEIL MIT QUERSCHNITTSÜBERGANG**

BEARING AND FORCE TRANSMISSION COMPONENT HAVING CROSS-SECTION TRANSITION

ÉLÉMENT DE SUPPORT OU DE TRANSMISSION DE FORCE PRÉSENTANT UNE TRANSITION DE SECTION TRANSVERSALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2011 DE 102011082243**

(43) Veröffentlichungstag der Anmeldung:
**16.07.2014 Patentblatt 2014/29**

(73) Patentinhaber: **ZF Friedrichshafen AG 88038 Friedrichshafen (DE)**

(72) Erfinder: **SCHEPER, Frank 49624 Loeningen (DE)**

(56) Entgegenhaltungen:
**DE-A1-102009 054 571**

## Beschreibung

**[0001]** Die Erfindung betrifft ein Lagerungs- oder Kraftübertragungsbauteil, insbesondere für eine Lagerung oder zur Kraftübertragung zwischen Baugruppen, mit einem Lastaufnahmebereich und einem gerundeten Querschnittsübergang zwischen dem Lastaufnahmebereich und dem Restbauteil, gemäß dem Oberbegriff von Patentanspruch 1.

**[0002]** Bei einem derartigen Bauteil, bei dem es sich beispielsweise, jedoch keineswegs ausschließlich, um ein Lenkerbauteil für eine Radaufhängung, um eine Spurstange, einen Kugelgelenkzapfen oder um einen Wellenabschnitt handeln kann, sind häufig Bereiche mit unterschiedlich großen Querschnitten bzw. unterschiedlich großen Durchmessern vorhanden. Zwischen den unterschiedlichen Querschnitten bzw. Durchmessern befinden sich Querschnittsübergänge, die aus Gründen der Optimierung des Kraftflusses und der Vermeidung von Spannungsspitzen zumeist gerundet ausgeführt sind.

**[0003]** In der Technik bilden die Ermüdungsschäden eine große Gruppe der Ausfälle. Die Gefahr des Ermüdungsschadens ist bei allen belasteten Bauteilen vorhanden, die zeitlich veränderlicher, häufig wiederholter Beanspruchung unterliegen. Insbesondere Fehlstellen, Kerben und Querschnittsübergängen bilden sich dabei Anrisse nach entsprechender dynamischer Belastung. Diese Anrisse können bei jedem weiteren Lastwechsel bis zum Restbruch wachsen. Das Versagen kann somit bei einer Beanspruchung entstehen, die weit unter der statischen Festigkeit des Bauteils liegt.

**[0004]** Formkerben entstehen in der Technik an Querschnitts- bzw. Steifigkeitsübergängen. Diese Querschnittsübergänge sind häufig funktionstechnisch und konstruktiv notwendig, zum Beispiel eine Welle mit einem Wellenabsatz zur Aufnahme eines Lagers. Dort verursachen Kerben erhöhte lokale Spannungskonzentrationen unter dynamischer und statischer Belastung. Sie können Risse initiieren die zu einem Ermüdungsbruch führen. Hohe Kerbspannungen verschlechtern das Betriebsfestigkeitsverhalten und die Robustheit der Bauteile. Durch Kerben folgt meistens eine größere Dimensionierung eines Bauteiles im oder am Steifigkeitsübergang.

**[0005]** Bekannt ist aus dem Stand der Technik bei gattungsgemäßen Lagerungs- oder Kraftübertragungsbauteilen ein Querschnittsübergang in Form einer Kerbe oder Formkerbe, die zumeist in Gestalt eines Viertelkreises ausgeführt ist. Diese Formkerbe bzw. der Viertelkreis als Hüllkurve des Querschnittsübergangs überhöht jedoch die Beanspruchung stark. Um die Beanspruchung zu reduzieren, muss der Radius der Formkerbe immer größer werden, um eine gewünschte hohe Lebensdauer zu erreichen. Hierdurch werden jedoch Bauraum und Material benötigt, was dem Leichtbau von Bauteilen entgegenläuft.

**[0006]** Aus der DE 10 2009 054 571 A1 ist ein Lagerungs- bzw. Kraftübertragungsbauteil mit Querschnittsübergang bekannt, bei dem der Verlauf der Hüllkurve des Querschnittsübergangs zumindest abschnittsweise mit dem positiven Ast bestimmter trigonometrischer Funktionen, beispielsweise mit dem Arkuskotangens übereinstimmt. Die Querschnittsübergänge bei diesem aus dem Stand der Technik bekannten Kraftübertragungsbauteils erfordern jedoch einen nicht unerheblichen Aufwand bei der konstruktiven bzw. zeichnerischen Erstellung. Zudem ist auch bei diesen bekannten Querschnittsübergängen - zur Realisierung des gewünschten niedrigen Materialspannungsniveaus - noch immer ein verhältnismäßig großer axialer und radialer Bauraum erforderlich.

**[0007]** Mit diesem Hintergrund ist es Aufgabe der vorliegenden Erfindung, ein Lagerungs- oder Kraftübertragungsbauteil mit gerundetem Querschnittsübergang bereitzustellen, mit dem die genannten, im Stand der Technik vorhandenen Einschränkungen überwunden werden können. Insbesondere soll die Erfindung es ermöglichen, Querschnittsübergänge an hochbelasteten Bauteilen - bei gleichzeitig minimalem Bauraumbedarf - so zu gestalten, dass die Spannungsüberhöhung möglichst gering ausfällt und damit eine hohe Lebensdauer des Bauteils erreicht wird. Auf diese Weise soll es möglich werden, hoch belastete Lagerungs- oder Kraftübertragungsbauteile optimal dimensionieren und auslegen zu können, um Material-, Bauraum- und Kostenaufwand zu reduzieren. Lagersitze oder Aufnahmen für Anschlussbauteile sollen mittels der Erfindung minimal dimensioniert werden können, wodurch sich Vorteile bezüglich Dimensionierung und Kosten von Lagerungen bzw. Anschlussbauteilen ergeben sollen.

**[0008]** Diese Aufgabe wird durch ein Lagerungs- oder Kraftübertragungsbauteil mit den Merkmalen des Patentanspruchs 1 gelöst. Bevorzugte Ausführungsformen sind Gegenstand der Unteransprüche.

**[0009]** Das Lagerungs- oder Kraftübertragungsbauteil teilt sich in bekannter Weise in zumindest einen Lastaufnahmebereich sowie in das Restbauteil auf, wobei Lastaufnahmebereich und Restbauteil einstückig ausgebildet sind. Dabei ist zwischen Lastaufnahmebereich und Restbauteil ein gerundeter Querschnittsübergang angeordnet, der vom Lastaufnahmebereich in Richtung auf das Restbauteil eine entlang einer Hüllkurve zunehmende Querschnittsfläche aufweist.

**[0010]** Das Lagerungs- bzw. Kraftübertragungsbauteil zeichnet sich jedoch dadurch aus, dass der Verlauf der Hüllkurve des Querschnittsübergangs zwischen Lastaufnahmebereich und Restbauteil zumindest abschnittsweise mit einer Teilellipse übereinstimmt, bei der das Längenverhältnis zwischen der längeren und der kürzeren Ellipsen-Halbachse der Euler'schen Zahl e entspricht.

**[0011]** Dabei ist der Begriff "Restbauteil" im Sinne der Erfindung als Bauteildifferenz zwischen dem Gesamtbauteil und dessen Lastaufnahmebereich zu verstehen, steht also für denjenigen Bereich des Lagerungs- oder Kraftübertragungsbauteils, der sich aus dem Gesamtbauteil abzüglich dessen Lastaufnahmebereich ergibt.

Die Euler'sche Zahl e definiert sich durch

$$e = \lim_{n \to \infty} \left( 1 + \frac{1}{n} \right)^n \approx 2{,}7182818$$

Der Quotient ist gebildet aus der längeren Halbachse der als Querschnittsübergang verwendeten Teilellipse und der kürzeren Ellipsen-Halbachse und stimmt mit der Euler'schen Zahl e überein.

Wie sich in Simulationen bzw. Versuchen gezeigt hat, lassen sich durch den Einsatz der Euler'schen Teilellipse für den Querschnittsübergang zwischen Lastaufnahmebereich und Restbauteil die im Bereich des Querschnittsübergangs auftretenden Material- bzw. Kerbspannungen und damit Versagenshäufigkeiten gegenüber dem Stand der Technik weiter erheblich reduzieren. Dank der Erfindung kann somit die Lebensdauer hochbelasteter Lagerungs- oder Kraftübertragungsbauteile weiter erhöht werden. Wahlweise oder zusätzlich zu einer Erhöhung der Lebensdauer können dank der Erfindung hochbelastete Lagerungs- oder Kraftübertragungsbauteile entsprechend kleiner dimensioniert und damit leichter, bauraumsparender und kostengünstiger ausgeführt werden. Ebenso wird es dank der Erfindung möglich, bei unveränderter Bauteildimensionierung leichtere bzw. kostengünstigere Materialien oder Herstellungsmethoden für gattungsgemäße Lagerungs- oder Kraftübertragungsbauteile mit Lastaufnahmebereichen und Querschnittsübergängen einzusetzen.

Der Querschnittsübergang zeichnet sich dadurch aus, dass er nur einen geringen Bauraumumfang beansprucht, sowohl in Axialrichtung (entlang der längeren Halbachse der Euler'schen Teilellipse), als auch in Radialrichtung des Querschnittsübergangs. Dies bringt neben einer Materialersparnis insbesondere Vorteile im Hinblick auf die Anordnung von Anschlussbaugruppen wie beispielsweise Elastomerlagern auf Lagerzapfen mit sich. Aufgrund des von der Euler'schen Teilellipse beanspruchten geringen Bauraums können somit beispielsweise Lagerstellen im Durchmesser kleiner ausgeführt und/oder näher am Restbauteil positioniert werden, wodurch die auftretenden Lagerbelastungen weiter abnehmen, was zu einer weiteren Erhöhung der Belastbarkeit bzw. Bauteillebensdauer führt.

Eine besonders bevorzugte Ausführungsform der Erfindung sieht dabei vor, dass die - in Form der Euler'schen Teilellipse ausgebildete - Hüllkurve des Querschnittsübergangs zwischen dem Lastaufnahmebereich und dem Restbauteil über den eigentlichen Querschnittsübergang hinaus in das Restbauteil hinein tangential extrapoliert ist, oder am Punkt des Übergangs in das Restbauteil punktgespiegelt ist. Dabei bildet die dergestalt durch tangentiale Extrapolation oder Punktspiegelung erzeugte Fortsetzung der Hüllkurve im Bereich dieser Fortsetzung die äußere Begrenzung des Restbauteils.

Dieser Ausführungsform liegt die Erkenntnis zugrunde, dass diejenigen Bereiche des Restbauteils, welche sich jenseits bzw. außerhalb der durch tangentiale Extrapolation oder Punktspiegelung erzeugten Fortsetzung der Hüllkurve des Querschnittsübergangs befinden, bei Belastung des Lagerungs- oder Kraftübertragungsbauteils im Allgemeinen praktisch spannungsfrei bleiben, da die Kraftlinien stets zum größten Teil innerhalb der extrapolierten Hüllkurve verlaufen. Die außerhalb dieser Fortsetzung der Hüllkurve gelegenen Bereiche des Restbauteils können somit entfernt werden, ohne dass die Belastungsfähigkeit des Lagerungs- oder Kraftübertragungsbauteils dadurch nennenswert geschwächt wird. Auf diese Weise lassen sich Material- und Bauraumbedarf und damit auch Gewicht und Kosten für ein derartig ausgeführtes Lagerungs- oder Kraftübertragungsbauteil weiter reduzieren.

Eine weitere bevorzugte Ausführungsform der Erfindung sieht vor, dass die Hüllkurve mehrere stetig und glatt (also tangential, bzw. mathematisch ausgedrückt stetig und differenzierbar) ineinander übergehende Abschnitte umfasst. Dabei stimmt zumindest einer der Abschnitte der Hüllkurve mit einer Euler'schen Teilellipse überein, während zumindest ein weiterer Abschnitt beispielsweise mit einer Geraden oder mit einem Kreissegment übereinstimmt. Auf diese Weise können auch vergleichsweise komplexe Bauteilbereiche mit Querschnittsübergängen versehen werden, die jeweils sowohl an die konstruktiv-geometrischen Anforderungen angepasst sind als auch bezüglich der Minimierung von Kerbspannungen optimiert sind. Dabei können insbesondere auch mehrere Abschnitte jeweils einer Euler'schen Teilellipse tangential aneinandergefügt werden.

Bei einer weiteren bevorzugten Ausführungsform der Erfindung ist eine der Hauptachsen des mit einer Euler'schen Teilellipse übereinstimmenden Abschnitts der Hüllkurve gegenüber der Längsachse des Lastaufnahmebereichs unter einem spitzen Winkel angeordnet. Bei dieser Ausführungsform verläuft mit anderen Worten eine der Hauptachsen der Euler'schen Teilellipse nicht mehr parallel zur Längsachse des Lastaufnahmebereichs, sondern schließt mit dieser einen Winkel ungleich und kleiner als 90° ein. Auf diese Weise können insbesondere mehrachsige Belastungsfälle optimal berücksichtigt werden dergestalt, dass sich auch bei mehrachsiger Belastung optimale Spannungslinienverläufe bzw. niedrige Kerbspannungen im Bereich des Querschnittsübergangs zwischen Lastaufnahmebereich und Restbauteil ergeben.

Prinzipiell lässt sich dabei die Erfindung bei allen Arten von Lagerungs- oder Kraftübertragungsbauteilen einsetzen, bei denen Bereiche unterschiedlichen Querschnitts materialsparend so miteinander verbunden werden müssen, dass sich ein optimaler Kraftlinienverlauf unter gleichzeitiger Minimierung von Spannungsüberhöhungen bzw. Kerbspannungen im Bereich der Querschnittsübergänge ergibt.

Gemäß einer besonders bevorzugten Ausführungsform handelt es sich bei dem Lagerungs- oder Kraftübertragungsbauteil jedoch um den Schaft bzw. Kugelzapfen eines Kugelgelenks, um einen Radführungslenker, beispielsweise Querlenker einer Radaufhängung, oder um eine Spurstange. Bei diesen Anwendungsfällen treten hohe dynamische Materialbelastungen insbesondere an solchen Querschnittsübergängen auf, an denen enge konstruktiv begründete oder bauraumbedingte Grenzen bestehen, weshalb die Lagerungs- oder Kraftübertragungsbauteile insbesondere im Bereich dieser Querschnittsübergänge nicht ohne Weiteres verstärkt oder mit größeren Abmessungen ausgeführt werden können.

Bei einem Kugelgelenk werden dank dieser Ausführungsform der Erfindung die Materialspannungen im Kugelzapfen nicht nur gleichmäßiger verteilt, sondern sind zudem durchweg niedriger als bei Kugelgelenken aus dem Stand der Technik. Dies kommt einer erhöhten Lebensdauer und einer Verringerung der Versagenswahrscheinlichkeit des so ausgeführten Kugelzapfens zugute.

Mit dem Hintergrund des Einsatzes der Erfindung bei einem Radführungslenker ist gemäß einer weiteren Ausführungsform der Erfindung vorgesehen, dass es sich bei dem Lastaufnahmebereich um einen Lagerzapfen des Radführungslenkers zur Aufnahme der Innenhülse eines Elastomerlagers oder Hydrolagers handelt. Bei dieser Ausführungsform kommen die Vorteile besonders deutlich zur Auswirkung, da den Aufnahmebereichen für Lagerungen konstruktiv und bezüglich der Abmessungen üblicherweise enge Grenzen gesetzt sind. Denn in solchen Fällen ist es einerseits zumeist erwünscht, Elastomerlager oder Hydrolager mit möglichst kleinem Innenhülsendurchmesser zu verwenden, um einen möglichst großen Bauraum innerhalb des Lagers für die Lagerfunktionalität verwenden zu können, und andererseits, um Lager mit möglichst kleinen Außenabmessungen einsetzen zu können. Zudem soll das Lager möglichst nahe am Körper des Radführungslenkers angeordnet sein, um Bauraum zu sparen und möglichst geringe Biegemomente in den Lastaufnahmebereich bzw. Lagerzapfen des Radführungslenkers einzuleiten.

Dank der Erfindung können somit die an Radführungslenkern oder Querlenkern angeordneten Lagerzapfen zur Aufnahme von Lagerungen - bei unveränderter Belastungsfähigkeit bzw. Lebensdauererwartung in den Abmessungen - insbesondere im Durchmesser reduziert werden. Auf diese Weise können entsprechend kleinere Lager Verwendung finden, oder die Lager können mit geringerem Abstand vom Körper des Radführungslenkers angeordnet werden. Alternativ kann - unter Beibehaltung der Abmessungen des Lagerzapfens - eine erhöhte Belastbarkeit des Lagerungs- oder Kraftübertragungsbauteils bzw. Radführungslenkers erzielt werden, oder es kann ein leichteres oder kostengünstigeres Material bzw. ein einfacheres Verfahren zur Herstellung des Lenkers verwendet werden, ohne dass gegenüber dem Ursprungsbauteil Einbußen bei der Belastbarkeit oder Lebensdauer des Lagerungs- oder Kraftübertragungsbauteils bzw. des Lagerzapfens auftreten.

Insbesondere mit dem Hintergrund des Einsatzes leichterer Werkstoffe oder kostengünstigerer Herstellungsverfahren sehen weitere Ausführungsformen der Erfindung vor, dass es sich bei dem Lagerungs- oder Kraftübertragungsbauteil um einen geschmiedeten, einen gegossenen oder um einen gegossenen und anschließend überschmiedeten Aluminium-Radführungslenker handelt. Bevorzugt ist der Aluminiumlenker dabei so ausgelegt, dass er einen ggf. vorhandenen Stahl-Radführungslenker kompatibel ersetzen kann.

Dank der Erfindung lassen sich somit beispielsweise Stahl-Querlenker durch kompatible Aluminium-Querlenker ersetzen, wodurch sich die ungefederten Massen der Radaufhängung eines Fahrzeugs erheblich verringern und der Fahr- und Federungskomfort entscheidend erhöhen lassen. Die Erfindung ermöglicht dank der erhöhten Belastbarkeit von Übergangsbereichen insbesondere an Lagerzapfen dabei sogar die ggf. maßkompatible Austauschbarkeit eines Stahl-Radführungslenkers durch einen Aluminium-Radführungslenker, ohne dass dabei wesentliche Änderungen an den Anschlussbauteilen, insbesondere an den Elastomer- bzw. Hydrolagern des Lenkers erfolgen müssen.

Es können dank der Erfindung mit anderen Worten beispielsweise Aluminium-Radführungslenker bereitgestellt werden, deren Lagerzapfen im Wesentlichen dieselbe Geometrie und dieselben Durchmesserbereiche wie diejenigen zuvor verwendeter Stahl-Radführungslenker aufweisen, ohne dass damit Einschränkungen bei der Belastbarkeit oder Lebensdauer der Aluminiumlenker gegenüber dem Lenkern aus Stahl gegeben wären.

Alternativ können dank der Erfindung auch vorhandene, komplett geschmiedete Aluminiumlenker auf kostengünstigere Herstellungsverfahren umgestellt werden, insbesondere auf die Verwendung von Gussteilen, bzw. von vorgegossenen Rohlingen, die lediglich noch einmalig überschmiedet werden, um das fertige Bauteil zu erhalten.

Im Folgenden wird die Erfindung anhand lediglich Ausführungsbeispiele darstellender Zeichnungen näher erläutert. Dabei zeigt

Fig. 1: in isometrischer Darstellung einen Querlenker als Ausführungsform eines Lagerungs- oder Kraftübertragungsbauteils mit Lastaufnahmebereich bzw. Lagerzapfen, einschließlich geschnitten dargestelltem Hydrolager;

Fig. 2: in schematischer Darstellung einen Längsschnitt durch den Lagerzapfen des Querlenkers gemäß Fig. 1;

Fig. 3: in schematischer Schnittdarstellung verschiedene Querschnittsübergänge zwischen dem Lastaufnahmebereich bzw. Lagerzapfen und dem Restbauteil bei dem Querlenker gemäß Fig. 1 bis 3;

Fig. 4: in schematischer Darstellung nochmals den Längsschnitt durch den Lagerzapfen des Querlenkers gemäß Fig. 1 bis 4;

Fig. 5: in einer weiteren schematischen Darstellung den Längsschnitt durch den Lagerzapfen des Querlenkers gemäß Fig. 1 bis 5 mit verschiedenen Querschnittsübergängen; und

Fig. 6: in Diagrammdarstellung die Materialspannungen an der Oberfläche der verschiedenen Querschnittsübergänge gemäß Fig. 4 bzw. 6.

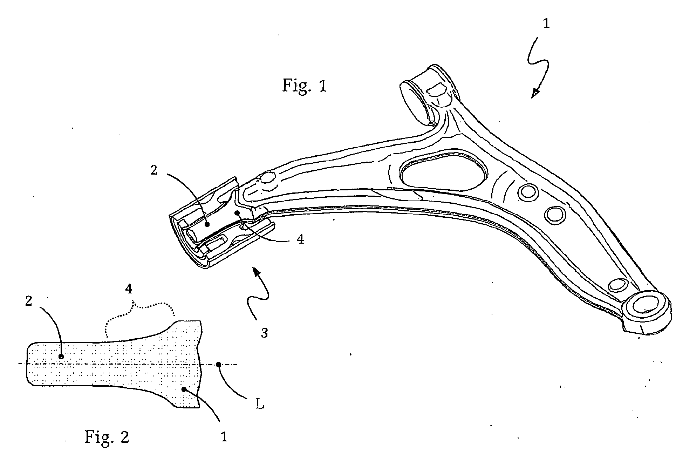

Fig. 1 zeigt als Ausführungsform eines Lagerungs- oder Kraftübertragungsbauteils mit Lastaufnahmebereich in isometrischer Darstellung einen Querlenker 1, 2 mit einem als Lagerzapfen 2 ausgeführten Lastaufnahmebereich und einem im Bereich des Lagerzapfens 2 angeordneten Hydrolager 3. Das Hydrolager 3 ist dabei aufgeschnitten dargestellt, um den Lastaufnahmebereich in Form des Lagerzapfens 2 erkennen zu können.

Der dargestellte Querlenker 1, 2 ist als einstückiges Aluminium-Schmiedeteil ausgeführt. Es kann sich dabei insbesondere um ein als Gussrohling erzeugtes und anschließend überschmiedetes Lagerungs- oder Kraftübertragungsbauteil handeln. Solche in Form einer Kombination aus einem Gussverfahren und einem Schmiedeverfahren hergestellte Aluminium-Bauteile sind kostengünstig produzierbar und liegen von den Materialeigenschaften und der Belastbarkeit her zwischen einem reinen Gussteil und einem klassischen Schmiedeteil.

Die Ausbildung des Querschnittsübergangs 4 zwischen Lastaufnahmebereich 2 und Restbauteil 1 des Querlenkers ist - im Hinblick auf den Ersatz von klassischen Schmiedeteilen durch Gussteile oder durch gegossene und anschließend überschmiedete Bauteile - von Bedeutung, da der Übergang 4 zwischen Lastaufnahmebereich 2 und Restbauteil 1 einen der am höchsten beanspruchten Bereiche bildet. Dies gilt insbesondere dann, wenn ein bisher geschmiedeter Querlenker aus Aluminium - oder sogar ein Querlenker aus Stahl - durch einen gegossenen bzw. durch einen mit einem kombinierten Guss- und Schmiedeverfahren hergestellten Querlenker ersetzt werden soll, und dabei gleichzeitig die Abmessungen des Hydrolagers 3 im Bereich des Lagerzapfens 2 möglichst beibehalten werden sollen.

In diesem Fall können die Abmessungen des Lagerzapfens 2 kaum wesentlich vergrößert werden, weshalb andere Maßnahmen ergriffen werden müssen, um insbesondere die Dauerfestigkeit des Lagerzapfens 2 zu gewährleisten.

Fig. 2 zeigt einen schematischen Längsschnitt durch den Lastaufnahmebereich bzw. Lagerzapfen 2 des Querlenkers gemäß Fig. 1 mit dessen Längsachse L. Beim Stand der Technik werden diesbezüglich häufig Querschnittsübergänge 4 zwischen Lastaufnahmebereich 2 und Restbauteil 1 verwendet, welche aus Segmenten von Geraden und dazwischen angeordneten Radien bestehen. Derartige Querschnittsübergänge 4 führen jedoch zu verhältnismäßig hohen Kerbspannungen und entsprechenden Versagenshäufigkeiten.

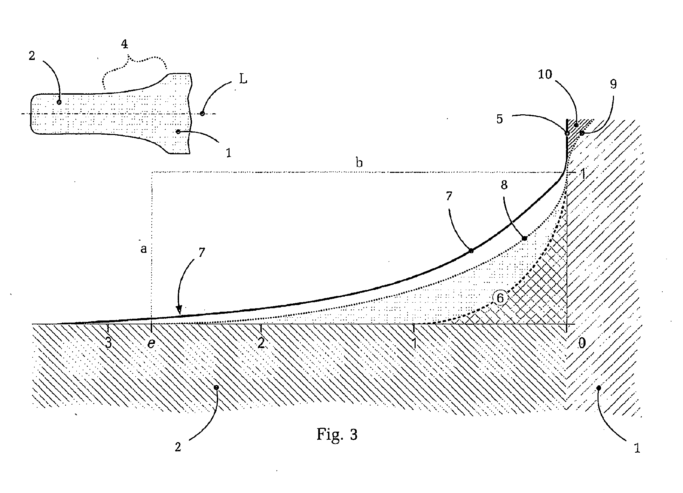

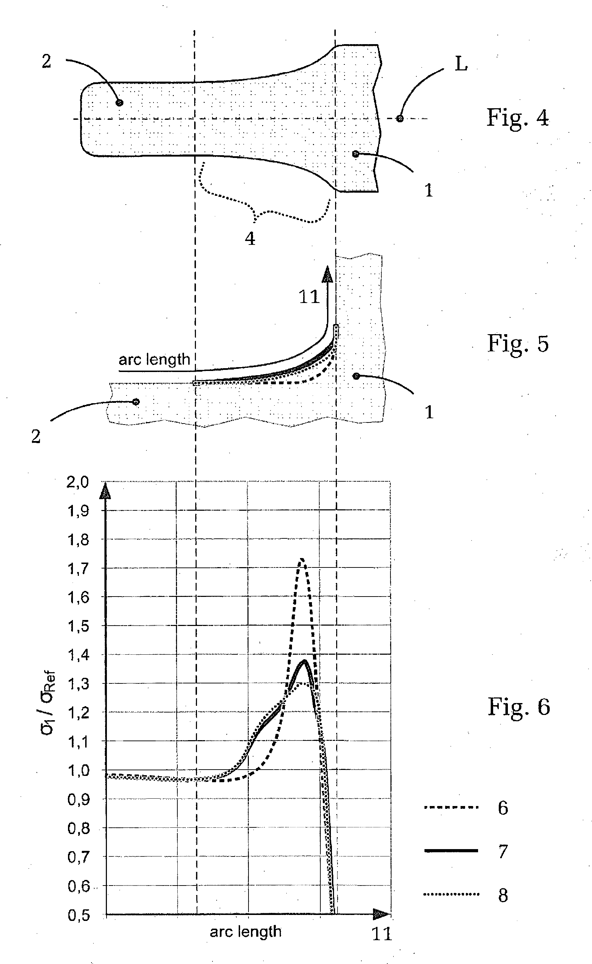

Fig. 3 zeigt schematisch nochmals einen Querschnittsübergang 4 zwischen einem Lagerzapfen bzw. Lastaufnahmebereich 2 und einem zugehörigen Restbauteil 1 (vgl. nochmals oberhalb von Fig. 4 eingefügte Darstellung des Lagerzapfens gemäß Fig. 2), sowie eine Auswahl von Hüllkurven für mögliche Querschnittsübergänge zwischen Lastaufnahmebereich 2 und Restbauteil 1. Im Unterschied zu den Darstellungen in Fig. 1 und 2 ist das Restbauteil 1 bei der Darstellung gemäß Fig. 3 nicht horizontal abgesetzt, sondern verläuft am zeichnungsbezogen rechten Ende der Übergangskurven 6, 7, 8 (im Bereich bei 5) zeichnungsbezogen weiterhin vertikal.

Man erkennt in Fig. 3 zunächst, dass die Euler'sche Teilellipse 8 einen allmählichen und gleichmäßigen Verlauf der Hüllkurve 6 für den Querschnittsübergang zwischen Lastaufnahmebereich bzw. Lagerzapfen 2 und Restbauteil 1 bildet. Schon damit ist der durch die Euler'sche Teilellipse 8 gebildete Querschnittsübergang ersichtlich vorteilhaft im Hinblick auf die Vermeidung von Kerbspannungen.

Als strichlierte Linie 6 bzw. durchgehende Linie 7 gezeichnet sind in Fig. 3 zwei Varianten für aus dem Stand der Technik bekannte kreissegmentförmige Hüllkurven 6 bzw. trigonometrische Hüllkurven 7 für den Querschnittsübergang. Dabei handelt es sich bei der Hüllkurve 6 um ein 90°-Kreissegment, während die Hüllkurve 7 dem Verlauf eines Astes des Arkuskotangens entspricht. Damit stimmt die Hüllkurve 7 auch im Wesentlichen mit dem bereits in Fig. 1 bzw. 2 dargestellten, aus dem Stand der Technik bekannten Querschnittsübergang 4 überein, lediglich mit dem Unterschied des vertikalen Auslaufs 5 der Hüllkurve 7 in Fig. 3, während der Auslauf bzw. Übergang in das Restbauteil 1 in den Fig. 1 und 2 horizontal erfolgt.

Die in Fig. 3 punktiert dargestellte Hüllkurve 8 hingegen entspricht dem Verlauf der Euler'schen Ellipse, bei der das Längenverhältnis zwischen der längeren und der kürzeren Ellipsenhalbachse mit der Euler'schen Zahl e übereinstimmt. Da die in Fig. 3 dargestellte Euler'sche Teilellipse 8 eine kürzere Halbachse a der Länge 1 Längeneinheiten aufweist, schneidet sie den Lastaufnahmebereich bzw. Lagerzapfen 2 bei "e" Längeneinheiten, welches somit der Länge der längeren Halbachse b der Euler'schen Teilellipse 8 entspricht.

In diesem Zusammenhang wird auch erkennbar, dass die Euler'sche Teilellipse 8 deutlich näher entlang des Lagerzapfens 2 bzw. des Restbauteils 1 verläuft, als die aus dem Stand der Technik bekannte trigonometrische Übergangskurve 7. Dies bedeutet, dass beim Einsatz der Euler'sche Teilellipse 8 als Übergangskurve zwischen einem Lagerzapfen 2 und einem Restbauteil 1 ein größerer Bauraum beispielsweise zur Anordnung eines Elastomer- oder Hydrolagers 3 (vgl. Fig. 1) zur Verfügung steht, bzw. dass Elastomer- oder Hydrolager 3 mit kleinerem Durchmesser verwendet werden können. Beim Einsatz eines Querlenkers aus Stahl durch einen Querlenker aus Aluminium können aus den gleichen Gründen somit Elastomer- oder Hydrolager 3 mit allenfalls geringen Maßänderungen oder Modifikationen verwendet werden.

Dennoch sind die auftretenden Materialspannungen (vgl. Fig. 6) beim Einsatz der Euler'schen Teilellipse 8 deutlich geringer als bei der trigonometrischen Übergangskurve 7, die jedoch einen deutlich größeren radialen Bauraum und ebenso einen längeren Auslauf entlang des Lagerzapfens 2 benötigt als die Euler'sche Teilellipse 8.

In der Darstellung von Fig. 3 ist die der Euler'schen Teilellipse 8 entsprechende Hüllkurve am Übergang in das Restbauteil 1 ferner nochmals punktgespiegelt und noch ein Stück 9 weit in das Restbauteil 1 hinein verlängert bzw. extrapoliert. Hierdurch wird ein Teil 10 des Restbauteils 1 abgeschnitten, der in Fig. 3 fein schraffiert dargestellt ist. Dieser schraffierte Teil 10 des Restbauteils 1 kann ohne Nachteile bezüglich der Belastbarkeit bzw. Dauerfestigkeit des Querschnittsübergangs zwischen Lastaufnahmebereich 2 und Restbauteil 1 entfernt werden, wodurch sich weitere Massereduzierungen und Bauraumeinsparungen an dem so ausgeführten Lagerungs- bzw. Kraftübertragungsbauteil ergeben.

Die Fig. 4 bis 6 dienen der Veranschaulichung der mittels der Euler'schen Teilellipse 8 gemäß Fig. 3 erreichten Verbesserungen bei den auftretenden Material- bzw. Kerbspannungen entlang des Querschnittsübergangs 4 zwischen Lastaufnahmebereich bzw. Lagerzapfen 2 und Restbauteil 1. Hierzu ist in Fig. 4 nochmals der Längsschnitt durch den Lagerzapfen 2 im Bereich des Querschnittsübergangs 4 zum Restbauteil 1 dargestellt, während Fig. 5 nochmals schematisch die unterschiedlichen Querschnittsübergänge 6, 7, 8 (vgl. Fig. 3) visualisiert.

Der Pfeil 11 in Fig. 5 verdeutlicht, auf welche Weise in dem Diagramm gemäß Fig. 6 die Bogenlänge 11 entlang der x-Achse abgetragen ist. Mit anderen Worten zeigt das Diagramm gemäß Fig. 6 den Verlauf der Hauptspannungen $\sigma_1$ entlang der Oberfläche des Querschnittsübergangs 4. Um eine normierte Darstellung zu erhalten, sind die Materialspannungen $\sigma_1$ im Diagramm gemäß Fig. 6 auf die Referenzspannung $\sigma_{Ref}$ bezogen, welche für die Materialspannung im geraden Teil des Lagerzapfens 2 außerhalb des Querschnittsübergangs 4 steht, und stellen somit die jeweilige relative Kerbspan-nung bzw. Spannungsüberhöhung im Querschnittsüber-gang 4 dar.

Im dargestellten Belastungsfall handelt es sich um Zugbelastung zwischen dem Lagerzapfen 2 und dem Restbauteil 1 entlang der zeichnungsbezogen horizontalen Längsachse L des Lagerzapfens 2, wobei sich die relativen Materialspannungswerte bei anderen Belastungsfällen - wie beispielsweise Druck, Biegung und Torsion - ähnlich darstellen.

Man erkennt in Fig. 6 entscheidende Unterschiede in der Höhe der Materialspannungen insbesondere im Bereich unmittelbar vor dem Übergang in das Restbauteil 1. Im Vergleich mit der kreissegmentförmigen Hüllkurve 6 für den Querschnittsübergang (vgl. auch Fig. 3) liegen die maximalen Materialspannungen beim Einsatz der Euler'schen Teilellipse 8 beim dargestellten Ausführungsbeispiel entscheidend (um mehr als 25 %) niedriger. Da die Höhe der Materialspannungen unter dynamischer Belastung nichtlinear in die Lebensdauer eines Lagerungs- oder Kraftübertragungsbauteils eingeht, führt die in Fig. 6 ersichtliche Reduktion der Kerb-spannungen zwischen dem Viertelkreis-Querschnittsü-bergang 6 und der Euler'schen Teilellipse 8 zu einer effektiven Vervielfachung der Lebensdauer des dergestalt ausgeführten Lagerungs- oder Kraftübertragungsbauteils, im dargestellten Beispiel um das Fünffache.

Dank der auf diese Weise mit der Erfindung massiv erhöhten Dauerfestigkeit bzw. reduzierten Ver-sagenswahrscheinlichkeit im Bereich eines Quer-schnittsübergangs 4 ergibt sich - am Beispiel des Querlenkers 1 - somit insbesondere die Möglichkeit, einen bisher konventionell geschmiedeten Aluminiumquerlenker beispielsweise durch einen kostengünstigeren, kom-biniert gegossen/überschmiedet hergestellten Querlen-ker zu ersetzen, und dabei sogar noch zusätzliche Leistungsreserven bezüglich der Belastbarkeit bzw. Lebensdauer des Lagerzapfens 2 freizusetzen.

Ebenso wird es dank der Erfindung beispielsweise möglich, einen bisher in Stahl ausgeführten Querlenker durch einen Querlenker aus Aluminium zu ersetzen, ohne dass dabei maßgebliche Änderungen an der Dimensionierung insbesondere im Bereich des Lagerzapfens 2 vorgenommen werden müssten. Dies bedeutet mit anderen Worten, dass ein Aluminium-Querlenker einen Stahl-Querlenker ersetzen kann, ohne dass die Dimensionierung von Anschlussbauteilen, insbesondere Elastomer- bzw. Hydrolagern 3, im Bereich des Lagerzapfens 2 wesentlich verändert werden müsste.

In ähnlicher Weise lassen sich mit der beson-deren Gestaltung der Querschnittsübergänge beispiels-weise auch bei Kugelzapfen entscheidende Verbesserungen bezüglich Lebensdauer bzw. Belastbarkeit erzielen. Wahlweise können dank der Erfindung beispielsweise auch Kugelzapfen bei gleicher Belastbarkeit bzw. Lebensdauererwartung kleiner, leichter und schlanker ausgeführt werden, wodurch sich in vielen Fällen Vorteile bezüglich Gewicht, Bauraum und Kosten ergeben. Ähnliches gilt für zahlreiche weitere, hier nicht eigens dargestellte Anwendungsfälle der Erfindung, bei denen Bau-teile mit Querschnittssprüngen bzw. Querschnittsüber-gängen schwingende Belastungen unterworfen sind.

Im Ergebnis wird deutlich, dass sich mit der Erfindung Lagerungs- oder Kraftübertragungsbauteile insbesondere im Bereich von Lagerungen, ferner Kraftübertragungsteile wie z.B. Kugelzapfen und Spurstangen, oder Lagerungs- bzw. Kraftübertragungsbauteile für Radaufhängungen realisieren lassen, die dank der Erfindung entweder entscheidend höher belastbar sind, oder die bei gleicher Belastbarkeit und Lebensdauer entsprechend kleiner und leichter dimensioniert werden können.

Die Erfindung leistet damit einen entscheidenden Beitrag zur Bereitstellung leichter, jedoch hochbelastbarer Kraftübertragungsteile, ferner zur Vergrößerung der Einsatzmöglichkeiten von Leichtwerkstoffen bzw. zum Ersatz teurer Schmiedeverfahren durch andere Herstellungsmethoden, beispielsweise bei der Anwendung im Bereich der Kraftübertragung im Antriebsstrang bzw. bei Radaufhängungen und an der Radführung von Kraftfahrzeugen.

Bezugszeichen

| | |
|---|---|
| 1 | Restbauteil |
| 2 | Lastaufnahmebereich, Lagerzapfen |
| 3 | Elastomerlager, Hydrolager |
| 4 | Querschnittsübergang |
| 5 | Begrenzung Restbauteil |
| 6 | Viertelkreis-Hüllkurve, Formkerbe, Kerbe |
| 7 | Arkuskotangens-Hüllkurve |
| 8 | Euler'sche Teilellipse |
| 9 | Punktspiegelung der Euler'schen Teilellipse |
| 10 | abgeschnittener Bauteilbereich |
| 11 | Bogenlänge |
| a, b | Ellipsen-Halbachse |
| $e$ | Euler'sche Zahl |
| L | Lagerzapfen-Längsachse |

**Patentansprüche**

**1.** Lagerungs- oder Kraftübertragungsbauteil (1, 2), umfassend zumindest einen Lastaufnahmebereich (2) mit einer Längsachse (L), wobei Lastaufnahmebereich (2) und Restbauteil (1) einstückig ausgebildet sind und wobei zwischen Lastaufnahmebereich (2) und Restbauteil (1) ein gerundeter Querschnittsübergang (4) mit einer zwischen Lastaufnahmebereich (2) und Restbauteil (1) entlang einer Hüllkurve (6, 7, 8) zunehmende Querschnittsfläche angeordnet ist, wobei der Verlauf der Hüllkurve des Querschnittsübergangs (4) entlang der Längsachse (L) des Lastaufnahmebereichs (2) zumindest abschnittsweise mit einer Teilellipse (8) übereinstimmt, **dadurch gekennzeichnet, dass** das Längenverhältnis zwischen der längeren (b) und der kürzeren Ellipsen-Halbachse (a) der eulerschen Zahl $e$ entspricht.

**2.** Lagerungs- oder Kraftübertragungsbauteil nach Anspruch 1, **dadurch gekennzeichnet, dass** die Hüllkurve des Querschnittsübergangs (4) zwischen Lastaufnahmebereich (2) und Restbauteil (1) in einen Bereich (10) des Restbauteils (1) tangential extrapoliert oder punktgespiegelt ist und in diesem Bereich die äußere Begrenzung (9) des Restbauteils (1) bildet.

**3.** Lagerungs- oder Kraftübertragungsbauteil nach Anspruch 1 oder 2, **dadurch gekennzeichnet, dass** die Hüllkurve (6, 7, 8) mehrere stetig und glatt ineinander übergehende Abschnitte umfasst, von denen zumindest ein Abschnitt mit einer Euler'schen Teilellipse (8) übereinstimmt.

**4.** Lagerungs- oder Kraftübertragungsbauteil nach einem der Ansprüche 1 bis 3, **dadurch gekennzeichnet, dass** eine Hauptachse (a, b) eines mit einer Euler'schen Teilellipse (8) übereinstimmenden Abschnitts der Hüllkurve gegenüber der Längsachse (L) des Lastaufnahmebereichs einen spitzen Winkel einschließt.

**5.** Lagerungs- oder Kraftübertragungsbauteil nach einem der Ansprüche 1 bis 4, **dadurch gekennzeichnet, dass** das Lagerungs- oder Kraftübertragungsbauteil ein an einem Grundbauteil anordenbarer Kugelzapfen eines Kugelgelenks oder eine Spurstange einer Radaufhängung ist.

**6.** Lagerungs- oder Kraftübertragungsbauteil nach einem der Ansprüche 1 bis 4, **dadurch gekennzeichnet, dass** das Lagerungs- oder Kraftübertragungsbauteil ein Radführungslenker ist.

**7.** Lagerungs- oder Kraftübertragungsbauteil nach Anspruch 6, **dadurch gekennzeichnet, dass** der Lastaufnahmebereich des Radführungslenkers durch einen Lagerpin (2) für die Innenhülse eines Elastomerlagers oder Hydrolagers (3) gebildet ist.

**8.** Lagerungs- oder Kraftübertragungsbauteil nach Anspruch 6 oder 7, **dadurch gekennzeichnet, dass** das Lagerungs- oder Kraftübertragungsbauteil ein geschmiedeter Aluminium-Radführungslenker ist.

**9.** Lagerungs- oder Kraftübertragungsbauteil nach einem der Ansprüche 6 bis 8, **dadurch gekennzeichnet, dass** das Lagerungs- oder Kraftübertragungsbauteil ein gegossener und anschließend überschmiedeter, oder ein gegossener Aluminium-Radführungslenker ist.

**Claims**

**1.** Bearing or force transmission component (1, 2), comprising at least one load-bearing region (2) with a longitudinal axis (L), the load-bearing region (2) and the remaining component (1) being configured in one piece, and a rounded cross-sectional transition (4) with a cross-sectional area which increases along an envelope curve (6, 7, 8) between the load-bearing region (2) and the remaining component (1) being arranged between the load-bearing region (2) and the remaining component (1), the course of the envelope curve of the cross-sectional transition (4) along the longitudinal axis (L) of the load-bearing region (2) coinciding at least in sections with a partial ellipse(8), **characterized in that** the length ratio between the longer (b) and the shorter ellipse half-axis (a) corresponds to Euler's number e.

2. Bearing or force transmission component according to Claim 1, **characterized in that** the envelope curve of the cross-sectional transition (4) between the load-bearing region (2) and the remaining component (1) is extrapolated tangentially or point-reflected into a region (10) of the remaining component (1) and forms the outer boundary (9) of the remaining component (1) in this region.

3. Bearing or force transmission component according to Claim 1 or 2, **characterized in that** the envelope curve (6, 7, 8) comprises a plurality of sections which merge continuously and smoothly into one another and of which at least one section coincides with a Eulerian partial ellipse (8).

4. Bearing or force transmission component according to one of Claims 1 to 3, **characterized in that** a main axis (a, b) of a section of the envelope curve, which section coincides with a Eulerian partial ellipse (8), encloses an acute angle with respect to the longitudinal axis (L) of the load-bearing region.

5. Bearing or force transmission component according to one of Claims 1 to 4, **characterized in that** the bearing or force transmission component is a ball pivot of a ball joint, which ball pivot can be arranged on a main component, or a track rod of a wheel suspension system.

6. Bearing or force transmission component according to one of Claims 1 to 4, **characterized in that** the bearing or force transmission component is a wheel control link.

7. Bearing or force transmission component according to Claim 6, **characterized in that** the load-bearing region of the wheel control link is formed by a bearing pin (2) for the inner sleeve of an elastomeric bearing or hydromount (3).

8. Bearing or force transmission component according to Claim 6 or 7, **characterized in that** the bearing or force transmission component is a forged aluminium wheel control link.

9. Bearing or force transmission component according to one of claims 6 to 8, **characterized in that** the bearing or force transmission component is a cast and subsequently forged aluminium wheel control link or a cast aluminium wheel control link.

**Revendications**

1. Elément de support ou de transmission de force (1, 2), comprenant au moins une zone de reprise de charge (2) avec un axe longitudinal (L), dans lequel la zone de reprise de charge (2) et le reste de l'élément (1) sont réalisés d'un seul tenant et dans lequel une transition de section transversale arrondie (4) est disposée entre la zone de reprise de force (2) et le reste de l'élément (1) avec une aire de section transversale croissante le long d'une courbe enveloppe (6, 7, 8) entre la zone de reprise de force (2) et le reste de l'élément (1), dans lequel l'allure de la courbe enveloppe de la transition de section transversale (4) le long de l'axe longitudinal (L) de la zone de reprise de force (2) coïncide au moins localement avec une ellipse partielle (8), **caractérisé en ce que** le rapport des longueurs entre le demi-axe long (b) et le demi-axe court (a) de l'ellipse correspond au nombre eulérien e.

2. Elément de support ou de transmission de force selon la revendication 1, **caractérisé en ce que** la courbe enveloppe de la transition de section transversale (4) entre la zone de reprise de charge (2) et le reste de l'élément (1) est extrapolée tangentiellement ou réfléchie point par point dans une zone (10) du reste de l'élément (1) et forme dans cette zone la limitation extérieure (9) du reste de l'élément (1).

3. Elément de support ou de transmission de force selon la revendication 1 ou 2, **caractérisé en ce que** la courbe enveloppe (6, 7, 8) comprend plusieurs segments se prolongeant mutuellement de façon continue et lisse, dont au moins un segment coïncide avec une ellipse partielle d'Euler (8).

4. Elément de support ou de transmission de force selon l'une quelconque des revendications 1 à 3, **caractérisé en ce qu'**un axe principal (a, b) d'un segment de la courbe enveloppe coïncidant avec une ellipse partielle d'Euler (8) forme un angle aigu par rapport à l'axe longitudinal (L) de la zone de reprise de charge.

5. Elément de support ou de transmission de force selon l'une quelconque des revendications 1 à 4, **ca-**

**ractérisé en ce que** l'élément de support ou de transmission de force est un pivot sphérique d'une articulation sphérique pouvant être disposé sur un élément de base ou est une bielle de connexion d'une suspension de roue.

6. Elément de support ou de transmission de force selon l'une quelconque des revendications 1 à 4, **caractérisé en ce que** l'élément de support ou de transmission de force est une bielle de guidage de roue.

7. Elément de support ou de transmission de force selon la revendication 6, **caractérisé en ce que** la zone de reprise de charge de la bielle de guidage de roue est formée par une broche de palier (2) pour la douille intérieure d'un palier élastomère ou d'un palier hydraulique (3).

8. Elément de support ou de transmission de force selon la revendication 6 ou 7, **caractérisé en ce que** l'élément de support ou de transmission de force est une bielle de guidage de roue en aluminium forgée.

9. Elément de support ou de transmission de force selon l'une quelconque des revendications 6 à 8, **caractérisé en ce que** l'élément de support ou de transmission de force est une bielle de guidage de roue coulée et ensuite reforgée, ou coulée en aluminium.

Fig. 1

2

4

3

Fig. 2

2

4

1

L

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- DE 102009054571 A1